# EUROPEAN PATENT SPECIFICATION

(11) **EP 1 114 660 B1**
(45) Date of publication and mention of the grant of the patent: **18.04.2007**
(21) Application number: 00311313.1
(22) Date of filing: 18.12.2000
(51) Int. Cl.: A63F 13/10

(54) **Game system and computer-readable storage medium**
Spielsystem und computerlesbares Aufzeichnungsmedium
Système de jeu et support d'enregistrement lisible par ordinateur

(30) Priority: 06.01.2000 JP 2000005762
(43) Date of publication of application: 11.07.2001
(73) Proprietor: Konami Corporation, Chiyoda-ku, Tokyo 100-6330 (JP)
(72) Inventor: Suzuki, Gen, C/o Konami Computer Entertainment, Higashi-ku, Nagoya-shi, Aichi (JP)
(74) Representative: Haley, Stephen

(56) References cited:
- EP-A- 0 916 375
- US-A- 5 713 792
- "Trophy Rivers" [ONLINE], [Online] 12 July 1998 (1998-07-12), pages 1-11, XP002136538 Retrieved from the Internet: <URL:www.gamestats.com/reviews/software/tr ophyrivers/trophyriversreview.html > [retrieved on 2000-04-27]
- "Bassmasters Classic" [ONLINE], 21 November 1999 (1999-11-21), pages 1-2, XP002160807 Retrieved from the Internet: <URL:pocket.ign.com/reviews/12089.htm> [retrieved on 2001-02-19]

## Description

This invention relates to a computer game system and a storage medium therefor.

### Description of the Prior Art:

There has been a fishing game for virtual experiences of fishing, in which a fishing spot is displayed on a screen of a display device, and positions and behaviors and so on of a fisher and a fishing rod in the screen are changed, according to a user (hereinafter also referred to as "player") operation to an input device. Especially, there have been developed many games for lure fishing having various kinds of strategic characteristics in selection of fishing points, lures, approaches, and their combinations.

In a conventional fishing game, the bite of fish on bait or lure (hereinafter simply referred to as "bite") is notified to a player in various ways such as a visual representation on a display screen, a sound output or a vibration of game device. In response, the player makes predetermined action by manipulating an input unit to set the hook on the fish (hereinafter simply referred to "hooking") and land the fish.

In such a fishing game system, the player gets to know the size of the fish for the first time when the player catches and lands the fish in the game. Of course, the player can presume the large size of the fish during the activity or fight against the fish after the hooking, if landing the fish is uneasy job or takes relatively long time. Even in such a case, however, the player cannot know the size of the fish before the bite, i.e., before the hooking. Therefore, the player normally catches all fishes that bite the bait or lure, regardless of the size of those fishes.

Further, in most of those fishing games, the player's goal in playing the game is to simply catch a possible largest fish. However, in order to enhance the gaming and competing pleasure in the fishing game, it is desired to introduce various competition styles other than simply competing the size of the fish caught.

"Trophy rivers", 12 July 1998, pages ito 11 discloses a game system which simulates a fishing environment.

It is an object of the present invention to provide a game system which provides the player with broad gaming and competing pleasure by notifying the size of the fish before hooking it.

It is another object of the present invention to provide a computer-readable storage medium for use in the above game system.

According to one aspect of the present invention, there is provided a game system comprising an image display device;
an input device for outputting signals according to manipulation made by a user; and
a control device for executing a fishing game in a virtual fishing spot with reference to the signals output from the input device, and for displaying images according to a progress of the fishing game on a screen of the display device, the control device comprising:
   a size determining means for determining a size of a virtual fish;
   a bite notifying means for presenting a temporal change of an amount relating to a bite by a fish to the user to notify the bite of the user;
   a change determining means for determining a changing amount and a changing time period of the amount relating to the bite based on the size of the fish determined by the size determining means;
   a detecting means for detecting a manipulation of the input device by the user during the changing time period; and
   a game executing means for executing the game on a condition that a fish is hooked if the detecting means detects the manipulation during the changing time period wherein the change determining means determines the changing amount and the changing time period of the amount relating to the bite such that the changing amount becomes larger and the changing time period becomes shorter as the size of the fish becomes larger, and wherein the bite notifying means comprises a tension display means for displaying a tension value imposed on a virtual fishing line on the screen, wherein the amount relating to the bite comprises the tension value, and wherein the changing time period comprises a time period from a time when the tension value starts changing to a time when the tension value returns to a value before the change.

In accordance with the game system thus configured, during the progress of the fishing game, first the size of fish is determined. Then, when the fish bites, the temporal change of the amount relating to the bite is notified to the user. At that time, at least one of a changing amount and a changing time period of the amount relating to the bite is determined based on the size of the fish. By this, the user can grasp the size of the virtual fish from the change of the amount relating to the bite of the fish. Therefore, the user can selectively catch fishes by judging the size of the fishes, and the strategic pleasure of the fishing game may be enhanced.

The bite notifying unit may include a vibrator for applying vibration of a vibrating amount corresponding to the changing amount to the input device for a vibrating time period corresponding to the changing time period. By this, the user can recognize the bite from the vibration of the input device. Since the vibration amount changes according to the size of the fish, the size of the fish may be judged from the vibration amount.

According to another aspect of the present invention there is provided a computer-readable storage medium for storing a game program for executing a fishing game in a virtual fishing spot with reference to signals output from an input device and for displaying images according to a progress of the fishing game on a screen of a display device, the program controls a computer to function as:
a size determining means for determining a size of a virtual fish;
a bite notifying means for presenting a temporal change of an amount relating to a bite by a fish to the user to notify the bite to the user;
a change determining means for determining a changing amount and a changing time period of the amount relating to the bite based on the size of the fish determined by the size determining means;
a detecting means for detecting a manipulation of the input device by the user during the changing time period; and
a game executing means for executing the game on a condition that a fish is hooked if the detecting means detects the manipulation during the changing time period, wherein the change determining means determines the changing amount and the changing time period of the amount relating to the bite such that the changing amount becomes larger and the changing time period becomes shorter as the size of the fish becomes larger, and wherein the bite notifying means comprises a tension display means for displaying a tension value imposed on a virtual fishing line on the screen, wherein the amount relating to the bite comprises the tension value, and wherein the changing time period comprises a time period from a time when the tension value starts changing to a time when the tension value returns to a value before the change.

According to the storage medium of the present invention, the computer may function as a control device in the game system of the present invention by making the computer read the program f or execution.

The term ""fishing rig" in the present invention includes lure, fly, pseudo bait and other kinds of elements to be operated for catching fish in actual fishing. The storage medium includes a magnetic storage medium, an optical storage medium, a magneto-optical storage medium, a semiconductor storage element, and other kinds of storage device.

The nature, utility, and further features of this invention will be more clearly apparent from the following detailed description with respect to preferred embodiment of the invention when read in conjunction with the accompanying drawings briefly described below.

In the Drawings
Fig. 1 is a diagram showing an embodiment of a hand-held game device of the present invention;
FIG. 2 is a diagram showing a schematic configuration of a control device installed in the hand-held game device of Fig. 1;
FIG. 3 is a view showing one example during playing a game, displayed on a screen of the hand-held game device of FIG. 1;
FIG. 4 is a diagram illustrating a content of a gauge of a shoal of fish displayed at both sides of the screen of FIG. 3;
FIG. 5 is a view showing how the display content of the gauge of a shoal of fish of FIG. 4 is changed according to movements of a pointer;
FIGS. 6A to 6D show level changes appearing on the line tension meter at the time a fish bites;
FIGS. 7A to 7C are views showing one example of a lure windows displayed on the main screen of FIG. 3 in an overlapping manner;
FIG. 8 is a view showing how a lure is operated according to a command given through the lure windows of FIGS. 7A to 7C;
FIGS. 9A to 9C are views showing another example of the lure window displayed on the main screen of FIG. 3 in an overlapping manner;
FIG. 10 is a view showing how a lure is operated according to a command given through the lure windows of FIGS. 9A to 9C;
FIG. 11 is a flowchart denoting a procedure for a main game processing executed by a CPU of a control device of FIG. 2;
FIG. 12 is a flowchart continued from FIG. 11;
FIG. 13 is a flowchart showing a procedure for a casting processing executed as a subroutine processing of FIG. 11;
FIG. 14 is a flowchart showing a bite processing executed by the CPU of the control device of FIG. 2;
FIG. 15 is a view showing another example of the lure window;
FIG. 16 is view showing still another example of the lure window; and
FIG. 17 is a view showing still another example of the lure window.

The preferred embodiment of the present invention will now be described below with reference to the attached drawings.

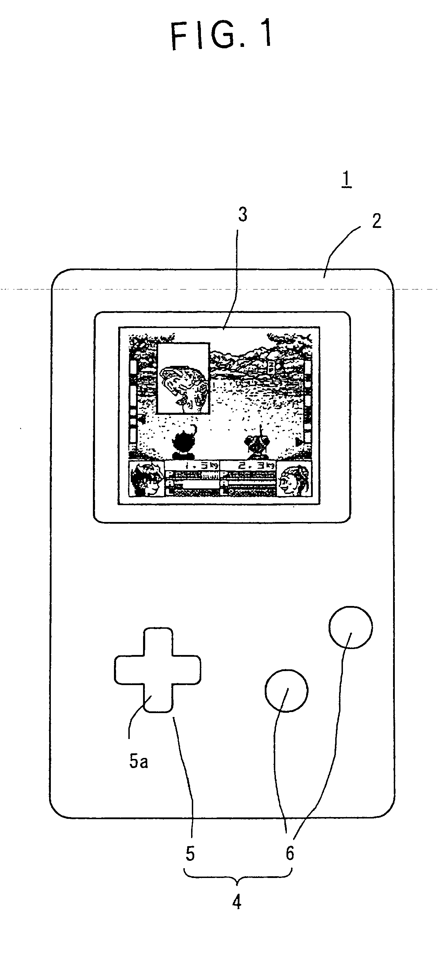

FIG. 1 shows an embodiment of a configuration of a hand-held game device according to the present invention. A hand-held game device 1 includes a main body 2, a liquid crystal monitor 3 installed in the main body 2 as a display device, and an input device 4. The input device 4 includes a direction indicating switch 5, and a plurality of push button switches 6. The direction indicating switch 5 includes an operation member 5a with, for example, a cross shape, and outputs signals according to operation for vertical, or crosswise direction motion (pushing operation of an end at the top, bottom, right, or left part) of the operation member 5a. Such configuration of the input device 4 is well known, and various kinds of variations may be possible. For example, instead of the operation member 5a, one push button switch may be arranged at the top, bottom, right, and left parts, respectively.

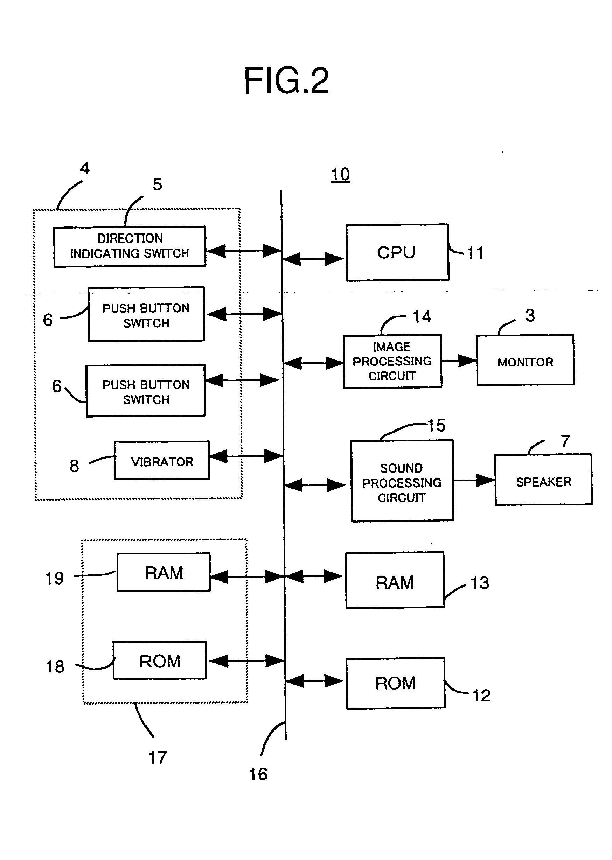

FIG. 2 shows a configuration of a control device 10 installed in the game device 1. The control device 10 is configured as a computer mainly composed of a CPU 11 using a microprocessor. The CPU 11 is connected to a ROM 12 and a RAM 13 as a main storage device, an image processing circuit 14, and a sound processing circuit 15 through a bus 16, respectively. Programs necessary for basic control (for example, start processing) of the game device 1 are stored in the ROM 12. The work area for the CPU 11 is secured in the RAM 13. The image processing circuit 14 controls a liquid crystal monitor 3 according to a drawing command from the CPU 11, and displays images on a screen of the monitor. The sound processing circuit 15 generates an analog audio signal according to a production command from the CPU 11, and outputs it to a speaker 7.

The CPU 11 is connected to the switches 5 and 6 of the input device 4 through the bus 16, and then able to judge the operation state of the switches 5 and 6. Optionally, the input device 4 may include a vibrator 8 for generating vibration. An external storage device 17 configured separately from the control device 10 is connected to the bus 16. The external storage device 17 is configured to be, for example, of a cassette type attachable to/detachable from the main body 2, and, for example, a ROM 18, and a RAM 19 are provided in the memory 17 as a storage medium. Programs make the control device 10 function as various kinds of devices of the present invention, and various kinds of data necessary for execution of the programs are previously stored in the ROM 18. For example, save data of a game are stored in the RAM 19 as required. The data in the RAM 19 are retained, for example, by auxiliary cells installed in the external storage device 17. In stead of the RAM 19, a rewritable ROM such as an EEPROM (electrically erasable and programmable read only memory) may be used. Not only a semiconductor storage element, but also various kinds of storage media such as a magnetic storage medium, an optical storage medium, and a magneto-optical storage medium may be used as the storage medium of the external storage medium 17. Although interface circuits may be respectively inserted between the bus 16 and each element as required, they are not shown in the drawing. The configuration of the control device 10 is not limited to the above, and various kinds of control devices may be used.

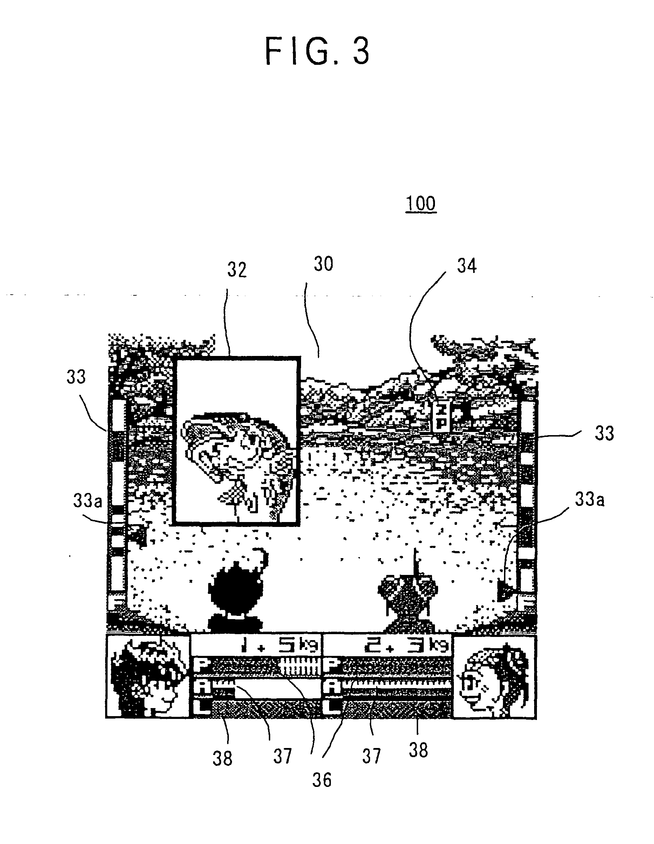

FIG. 3 shows one screen of a fishing game executed by the programs stored in the external storage device 17. A screen 100 of FIG. 3 is displayed in playing a fishing game, and it is displayed on the main screen 30 in that two game characters 31, 31 are fishing in a line. The player holding the game device 1 may perform casting and retrieving of a lure by operation of one of two characters through the input device 4, and then may compete with the other character for fishing results. The other character is controlled, for example, by the CPU 11. When a communication device is installed in the controller 10, other characters may be operated by a player operating another game device 1.

A sub-screen such as an animation window 32 is repeatedly displayed on the main screen 30, as required. The sub-screen is used to display an operation guide and various kinds of information, and so on for lures. The sub-screen is deleted, when it is not required. The animation window 32 in FIG. 3 is configured to display an image showing how fish is caught with the lure. Gauges of a shoal of fish 33, 33 are displayed on the main screen 30 at the right and left sides. The gauge of a shoal of fish 33 is of a vertically-slender, and rectangular shape, and the fish distribution between each character 31 and a pointer 34 is displayed on the gauge. The details will be described later. The pointer 34 is displayed as a mark in a direction of casting when each character 31 casts a lure. In order to make a clear distinction between the characters 31, 31, letters of "1P" are displayed on the pointer 34 for the character 31 at the left side of FIG. 3, and letters of "2P" are displayed on the pointer 34 for the character 31 at the right side of FIG. 3. Only the pointer 34 for the right character 31 is shown in FIG. 3.

A fishing result meter 35, a power meter 36, an appeal meter 37, and a line tension meter 38 are displayed on the bottom part of the main screen 30. The fishing result meter 35 displays the total weight of caught fishes by each character 31 in numeber. The power meter 36 displays the force (power) of each character 31 at casting. The left end of the meter 36 denotes the minimum power, and the right one shows the maximum power.

The casting position of the lure by the character is determined by relation between the power displayed on the power meter 36 and the position of the pointer 34. That is, the power meter 36 repeatedly performs expansion and contraction at a fixed cycle at casting of the lure. The pointer 34 is moved in a crosswise direction on the main screen 30 according to a selective operation in a predetermined casting direction (preferably, a crosswise operation of the direction indicating switch 5) for the input device 4. The casting distance of the lure is calculated in proportion to the power shown in the meter 36 at the time when the player performs a predetermined casting operation (for example, a pushing operation of the push button switch 6). The lure is cast to a position on the line connecting the character 31 and the pointer 34, according to the calculated casting distance.

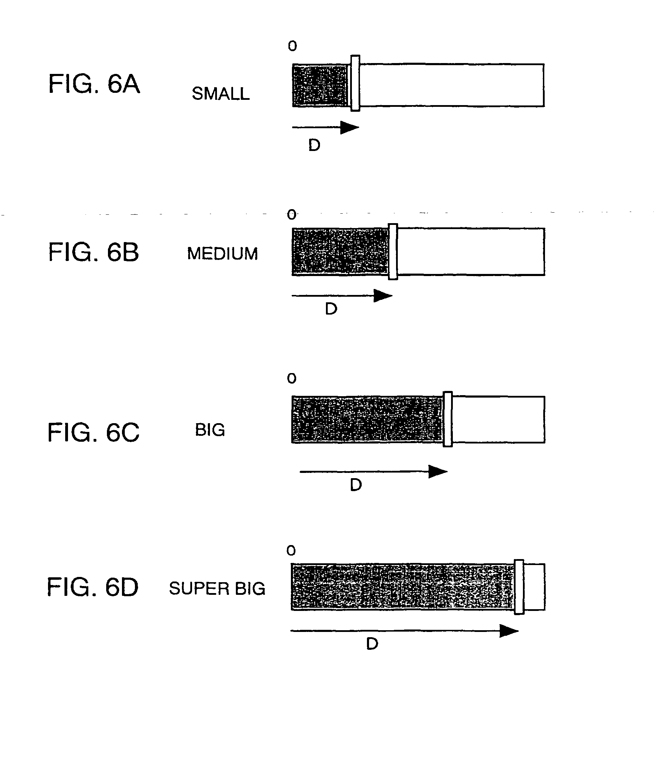

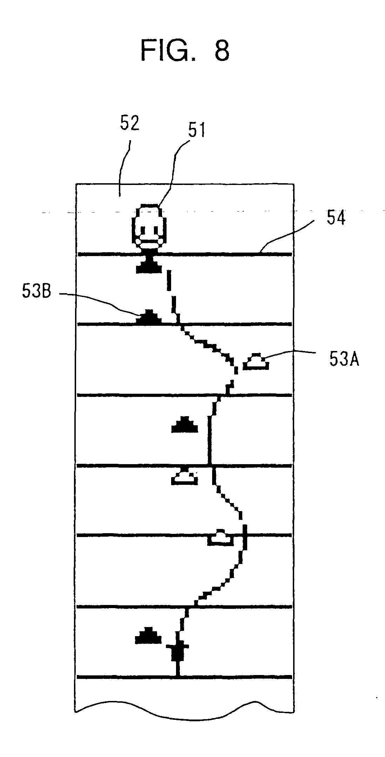

The appeal meter 37 is used to display an appeal degree of the lure to a fish. The left end of the meter 37 shows the minimum appeal degree, and the right one denotes the maximum appeal degree. The fish may not be caught when the appeal degree is not the maximum. The appeal degree is raised if the player actively operates the lure, according to a command for a lure action displayed on a lure window 50A shown in FIG. 6, or a lure window 50B shown in FIG. 8. The details of the lure windows 50A and 50B will be described later.

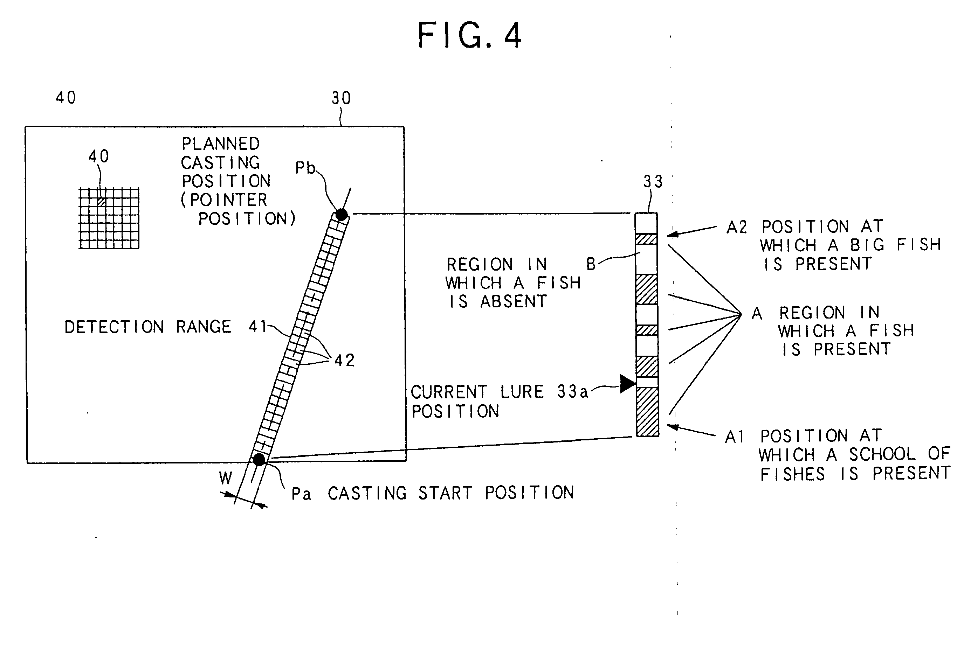

Then, the gauge of a shoal of fish 33 will be described, referring to FIG. 4. The display contents of the gauge 33 is controlled based on the fish arrangement within the detection range 41 with a predetermined width W defined between a position Pa (casting start position) of the character 31, and a position Pb (planned casting position) of the pointer 34. The width W is set as a range denoting that the lure may lure fish. In the present embodiment, though the player may select a lure for fishing from a plurality of lures, the width W may be set at a fixed value independent from the kinds of the lures, or the width may be changed according to the lures. In addition, the detection range 41 is longitudinally divided into a plurality of sections 42 ··· 42.

On the other hand, the underwater part of the main screen 30 is divided into a lot of areas 40···40 (one area is shown by hatching in FIG. 4). And the fish arrangement is decided for each area 40 by the CPU 11 at the start of fishing. The fish arrangement of the fish may be calculated by every area 40 as required, using a predetermined operational formula, or a plurality of data on fish arrangements may be previously made to be stored in the ROM 18 to select one item of data from those items of data as required. The above techniques have been adopted even by conventional fishing games, and then the details are eliminated. And the fish arrangement may be decided in consideration of the habits of actual fish. For example, the fish arrangement may be decided for each area 40, considering fish habits that a big fish performs comparatively solitary behavior and small fishes form a group.

When the gauge of a shoal of fish 33 is required to be displayed, the fish arrangement (presence of fish) for each section 42 may be detected by the CPU 11, based on the relation between each section 42 and area 40. And as for relation between a section 42 and an area 40, an area 40 which overlaps with a section 42 at a fixed rate (for example, 50%) may be dealt as a corresponding area 40 with the section 42, for example.

The character position Pa is located at the bottom of the gauge of a shoal of fish 33, the planned casting position Pb at the top of the gauge 33, and each section 42 in the detection range 41 is associated with each position in the gauge of a shoal of fish 33. Thereby, the gauge of a shoal of fish 33, having distinction between a section in one color with the presence of fish and one in the other color with no presence of fish, may be generated. That is, the detection result of a fish distribution in each section 42 within the detection range 41 is displayed at each position on the gauge 33, replacing the distance from one end of the detection range 41 with the distance from the bottom of gauge 33. In FIG. 4, hatched colored parts A (A1 and A2 are included) shows a part where fish is detected, and white parts B denotes a part where fish is not detected.

Thereby, the gauge of a shoal of fish 33 generated as shown above denotes fish distribution between the character position Pa and the planned casting position Pb. As mentioned above, when the fish arrangement is decided considering the difference in fish grouping habits between big fish and small fish, the longer colored part A1 shows that a lot of small fishes are forming a group, and the shorter colored part A2 denotes that there are small number of big fish. A triangular cursor 33a shows a current position in the gauge 33.

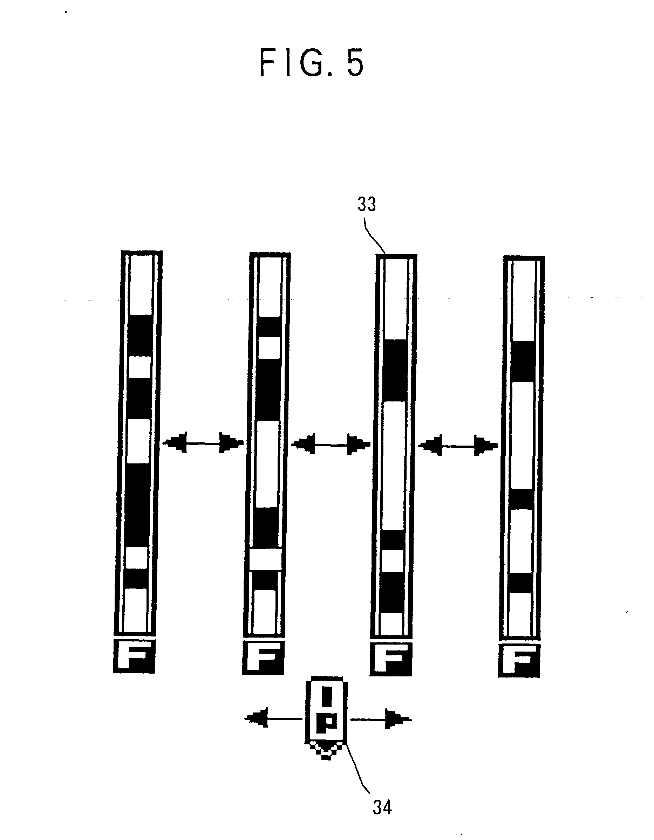

The planned casting position Pb in FIG. 4 is moved according to the crosswise movement of the pointer 34 in FIG. 3 on the main screen 30 in response to the operation of the player. Therefore, the gauge of a shoal of fish 33 is changed as shown in FIG. 5 according to the movement of the pointer 34, even if the fish arrangement in the main screen 30 is not changed. Though the gauge 33 is shown above the pointer 34 to show a relation between a crosswise movement of the pointer 34 and the change of the gauge 33 in FIG. 5, the display position of the gauge 33 is fixed to right and left end parts of the main screen 30 as shown in FIG. 3. The ratio of colored part A is the maximum in the gauge 33 at the left end part in FIG. 5, and the probability which a fish is caught is the maximum, if casting is performed at this time. Moreover the probability which a small fish is caught is the maximum. On the other hand, if casting is performed when there is displayed the gauge of a shoal of fish 33 at the right end part, the probability which a fish is caught is low, but a big fish may be caught.

In conventional fishing games, not enough information showing only that a sign of fish is displayed at a place with presence of a group of fish has been offered to the player. On the other hand, an wide range of the fish distribution may be obtained by changing the planned casting position Pb, as the fish distribution to the planned casting position Pb is shown in detail according to the gauge of a shoal of fish 33 mentioned above. Then the player may choose a method for fishing according to his or her taste. The game may be provided with an option to select a fishing method according to a playing rule of the game. When the fishing method is required to be changed according to the set rule, for example, a rule in which a character who has caught larger number of fishes within a fixed time is a winner, or a rule where one who has caught the biggest fish is a winner, a suitable casting position for the rule may be easily selected, referring to the gauge of a shoal of fish 33.

And the position Pa of the character 31 may be configured to be changed by an operation for the input device 4 (for example, a crosswise operation of the direction indicating switch 5). The gauge of a shoal of fish 33 is not limited to the one vertically extending, and may be the one extending in a crosswise direction. For example, if the lure is cast or retrieved in a crosswise direction on the screen, it may be conceivable that a gauge 33 with a long dimension in a crosswise direction is displayed at the top or bottom of the screen 30. The detection range 41 is not limited to total length on the line connecting the casting start position Pa and the planned casting position Pb, and may be a part of a range on the line. In addition, two arbitrary points may be set in the fishing spot according to an operation of the player, and the detection range 41 may be set on the line between those points.

Next, the description will be given of the operation by the game device 1 at the time when a fish bites the lure. The player judges whether or not a fish bites mainly by watching the line tension meter 38 shown in FIG. 3. The line tension meter 38 indicates the tension imposed on the virtual fishing line at the end of which the lure is tied. A bite by a fish is expressed by the temporary increase of the line tension shown by the ling tension meter 38, and it is visually presented to the player. Namely, while the player is casting and retrieving the lure, the line tension shows no large change, and the gauge of the line tension meter 38 shows the level slightly vibrating at "0" or approximately "0". However, if a fish bites, the fish draws the fishing line to temporarily increase the line tension, and accordingly the level of the ling tension meter 38 temporarily increases. Thus, the player recognizes the bite by fish when the level of the line tension meter 38 increases. Then, while the level of the line tension meter is kept at high level, the player pushes the predetermined switch on the input device 4 to set the hook on the fish (i.e., hooking). Normally, a fish finds out the lure and takes it into its mouth (i.e., bite), but then puts out the lure from its mouth after a while. The level of the line tension meter 38 keeps the increased level only when the lure is in the fish's mouth, and the level returns to the normal level when the fish releases the lure from its mouth. Therefore, the player should make hooking manipulation using the input device 4 while the level of the line tension meter 38 is temporarily high, i.e., while the fish is having the lure in its mouth.

The present invention is characteristic in that a bite by a fish, which is expressed by the level increase of the line tension meter 38, is changed in the following two methods in accordance with the size of the virtual fish that bites the lure. Those two manners will be described below. It is noted that not only either one of those two methods may be used, but both of them may be used at the same time.

The first method is based on the concept that "The larger the biting fish is, the larger the value (level increase) of the line tension meter at the time of the bite is". FIGS. 6A to 6D show the examples of the level increase of the line tension meter 38 when fishes of various size are biting. It is noted that, in FIGS. 6A to 6D, the size of the fish is classified into four groups, i.e., SMALL, MEDIUM, BIG, SUPER-BIG. As illustrated, the larger the size of the biting fish is, the larger the level increase (shifting width) D of the line tension meter 38 is. Therefore, the player can grasp the size of the biting fish by watching the level change of the line tension meter 38 at the time of bite, before making the hooking manipulation. By this, the player can enjoy strategic fishing play by, for example, letting the bite pass by without making the hooking manipulation if the size of the biting fish is small or uninteresting, and making the hooking manipulation and setting the hook to catch the fish if the size of the biting fish is big or interesting.

Specifically, in the event that multiple players compete with each other in the fishing game, there may be several competition styles, such as (1) QUICK CATCH COMPETITION, (2) FISH SIZE COMPETITION, (3) FISH WEIGHT COMPETITION, and (4) TIME-LIMIT COMPETITION.

In the QUICK CATCH COMPETITION, a player can win the game if he or she catches a predetermined number of fishes prior to any other players. In this case, the player can take a strategy of catching many fishes by hooking small fishes and letting the bite of large fishes go, because fighting and landing a large fish takes longer time than a small fish.

In the FISH SIZE COMPETITION, a player who catches the largest fish wins, regardless of the number of the fishes he or she catches. Therefore, the player takes the strategy of letting the small fish bites go and hooking large fishes to catch only large fishes.

In the FISH WEIGHT COMPETITION, a player wins the game if the total weight of the fishes he or she caught is highest among the competitors. In this case, the player can take his own strategy of, for example, catching many small fishes to steadily increase the total weight, or letting the small fish bites go and taking a gamble to catch only large fishes.

In the TIME-LIMIT COMPETITION, a time limit is introduced to the play, and the players can make his or her own best strategy to win the game in consideration of the condition of the game, the competitors, and the like. For example, the player may try to catch many fishes quickly if the time limit is approaching, or try to catch a big fish because he or she is behind at that time.

In this way, since the player can grasp the size of the fish at the time of its bite, the players can make various strategy in playing the game. This may introduce rich strategic and gaming pleasure into fishing game.

The second method is based on the concept that "the larger the biting fish is, the shorter the time period of the line tension meter 38 level being high, i.e., the time period from the increase of the line tension until it returns to approximately zero level (hereinafter referred to as "biting period") is. Normally, according to real-fishing experience, small fishes are inclined to keep the lure in its mouth relatively long time because they are less cautious, but large fishes are inclined to quickly release the lure from its mouth because of their high cautiousness. In this view, the biting period is set to be longer for small fishes and set to be shorter for large fishes. As mentioned above, the player cannot catch fish if he or she fails to make the hooking manipulation during the biting period. Therefore, larger fishes are more difficult to catch because their biting period is short and the player should complete the hooking manipulation during such short biting period. This may achieve gaming pleasure like real fishing.

In the fishing game of the present embodiment, various types of lures may be provided in a similar manner to the actual lure fishing. Peculiar information is set in each lure, and the information is previously recorded in the ROM 18 of the external storage device 17 as necessary data for the game. The information peculiar to each lure includes, for example, a name and type of the lure, and image data of a lure to be used. When the width W within the detection range 41 in FIG. 4 is changed according to the lure as mentioned above, information to set the width W may be preciously included in the information peculiar to the lure.

The lure used for actual fishing may be divided in a various manner. For example, from a view point of applied water depth, the lure may be divided to a top one for water surface use, a bottom one for water bottom use, a shallow one for shallow water depth use, and a middle one for middle water depth use. From a view point of a relation between the retrieving operation and the lure action, the lure may be divided to a type which sinks by pulling and floats by loosing, another type which floats by pulling, and sinks by loosing, or a further another type holding a fixed water depth independent of the presence or absence of retrieving. The information peculiar to each lure, which is recorded in the ROM 18, includes information for identification of the type of each lure. Though the detailed division into more lure types increases the virtual reality of the fishing game, the more lure types increases the more data for the lures to require the game device 1 with the higher processing performance, too. Thereby, it is preferable to set the quantity of information for each lure within the reasonable range, considering the processing performance of the game device 1.

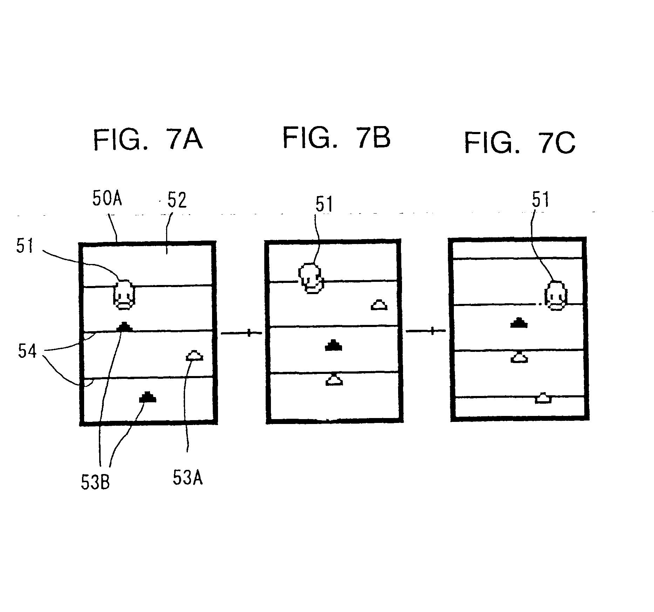

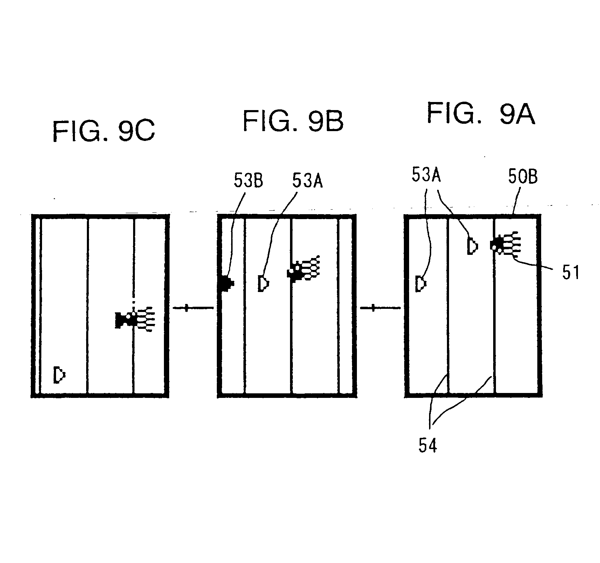

Then, a guiding method for the lure operation for a player will be described below, referring to FIGS. 7 to 10. When the player casts a lure by operation of a character 31 to be operated, a first type of a lure window 50A shown in FIG. 7, or a second type of a lure window 50B shown in FIG. 9 is displayed as a sub screen on the main screen 30 (See FIG. 3), according to the character 31 to be operated. In FIGS. 7 and 9, there are arranged three windows at different times, respectively, in order to show the changes in the lure windows 50A and 50B with time. In those drawings, time progresses in the order, A → B → C.

The first type of the lure window 50A shows, looking down from the above, how a lure 51 shown as an abstracted form for the first image is moving on the water surface or in the water, and the lure 51 is going toward the lower part of the window 50A (in a retrieving direction). On the other hand, the second type of the lure window 50B shows, along with the vertical section, how the lure 51 shown as an abstracted form is moving in the water, and the lure 51 is going toward the left part of the window 50B (in a retrieving direction). The selection of the lure window 50A or 50B depends on the lure type. Therefore, the information peculiar to the lure stored in the external storage device 17 is required to include information specifying the lure window 50A or 50B. For example, information specifying the lure type may be used. The data with a table having a relation between the lures and the lure window 50 to be used for the lure may be stored in the ROM 18.

The lure window 50A is convenient to display a crosswise movement of the lure 51, and the lure window 50B is preferable to show a vertical movement of the lure 51. Therefore, it is preferable to use the lure window 50A for the lure type without change in the water depth, and the window 50B for the type with change in the depth. And when there is no need to make difference between both the windows 50A and 50B, the expression of the lure window 50 may be used for the both, hereinafter.

The lure window 50 is displayed at the upper side of the character 30, and for example, when the character 31 at the left side of FIG. 3 is operated, the lure window 50 is displayed in place of the animation window 32. As shown in FIGS. 7 and 9, a background 52 is displayed in the lure windows 50A and 50B with the lure 51. And in the background 52, a plurality of partition lines 54···54 at equal distances extending in a crosswise direction of the lure window 50A are displayed with marks 53A and 53B of a triangular shape, as a second image which functions as a guide showing a passing position of the lure 51.

When the lure window 50A of FIG. 7 is displayed, the lure 51 is moved in a crosswise direction in the lure window 50A according to a predetermined course change operation for the input device 4. The course change operation is performed, imaging that the lure is moved in a zigzag direction by shaking a fishing rod in a crosswise direction, in actual fishing. Therefore, it is preferable to allocate the crosswise operation of the direction indicating switch 5 as the course change operation. The background 52 is moved in a scrolling display mode at a predetermined speed from the bottom to the top of the window 50A with marks 53A and 53B, and the partition lines 54. That is, in the case of the lure window 50A, the background 52 is configured as an image of a vertically-long strip shape as shown in FIG. 8, and a part of the background 52 is displayed in the lure window 50A. The display range is gradually moved downward, and the background 52 in the window 50A is scrolled. The background 52 is scrolled to show how the lure 51 is retrieved toward the character 31, moving in a zigzag direction according to the course change operation with the input device 4.

The marks 53A and 53B show a passing position of the lure 51 during an appropriate action of the lure 51. And the marks 53A and 53B are distinguished each other by color. If the player can make the lure 51 pass on the mark 53A by the crosswise operation, the appeal degree (a value of the appeal meter 37) is raised. And, the appeal degree is raised by a predetermined appeal operation (a coordination operation) according as the lure 51 passes on the mark 53B. The appeal operation is performed, imaging that the vertical action of the lure 51 is performed by the upward movement of the fishing rod, and it is preferable to set the upward operation by the direction indicating switch 5 as the appeal operation. The appeal degree is decreased if the lure 51 gets out of the mark 53A, or the appeal operation is not appropriately performed.

On the other hand, when the lure window 50B of FIG. 9 is displayed, the lure 51 performs a vertical movement on the window 50 according to the course change operation with the input device 4 by the player. The course change operation is performed, imaging that the depth of the lure is changed by changing the retrieving speed of the lure (pulling speed) in actual fishing, and, for example, it is preferable to deal the lure 51 as pulled by the operation of the direction indicating switch 5 in a left direction. That is, in the case of the lure 51 which sinks by pulling, and floats by loosing, the lure 51 is moved downward, assuming that the lure 51 is pulled, when the direction indicating switch 5 is operated in a left direction, and the lure 51 is gradually raised at a fixed rate when such operation is not performed. On the contrary, in the case of the lure 51 which floats by pulling, and sinks by loosing, the lure 51 is moved upward, when the direction indicating switch 5 is operated in a left direction, and the lure 51 is gradually moved downward at a fixed rate when such operation is not performed.

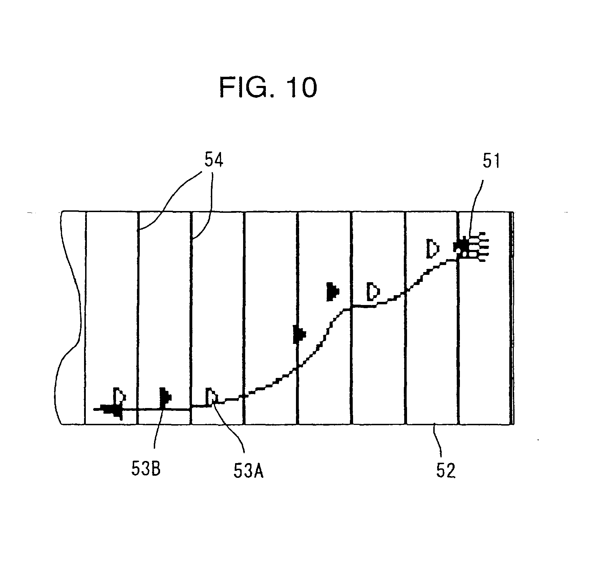

In the lure window 50B of FIG. 9, the background 52 is moved in a scrolling display mode at a predetermined speed from the left side to the right one of the window 50A with marks 53A and 53B, and the partition lines 54. That is, in the case of the lure window 50B, the background 52 is configured as an image of a crosswise strip shape as shown in FIG. 10, and a part of the background 52 is displayed in the lure window 50B. The display range is gradually moved in a left direction, and the background 52 in the window 50B is scrolled. The background 52 is scrolled to show how the lure 51 is retrieved toward the character 31, changing the water depth according to the course change operation with the input device 4.

The marks 53A and 53B show a passing position of the lure 51 during an appropriate action of the lure 51, in a similar manner to that of the embodiment in FIG. 7. And the marks 53A and 53B are distinguished each other by color. If the player can make the lure 51 pass on the mark 53A by changing the water depth of the lure 51, the appeal degree (a value of the appeal meter 37) is raised. And, the appeal degree is raised by a predetermined appeal operation (for example, an upward operation with the direction indicating switch 5) according as the lure 51 passes on the mark 53B. The appeal degree is decreased if the lure 51 gets out of the mark 53A, or the appeal operation is not appropriately performed.

As mentioned above, when the player operates the lure 51 with the input device 4 to move the lure 51 following the marks 53A and 53B, the appeal degree is gradually increased to the maximum value, as shown in FIGS. 8 and 10, respectively, according to the lure window 50A and 50B, and then it may start to catch more fish. As mentioned above, as the guidance for the operation of the lure 51 is given to the player, and the value of the appeal meter 37 is configured to be changed according to whether or not the operation of the player is appropriately responded to the guidance, the player may always monitor whether or not his or her lure is appropriately operated to have a positive response to the lure operation. But, a trajectories of the lure in FIGS. 8 and 10, are not displayed in the actual lure windows 50A and 50B.

The arrangement of the marks 53A and 53B in the background 52 may be previously made as data and stored in the ROM 18 of the external storage device 17. The arrangement of those marks may be produced as data by each lure 51, or the type of the lure 51, or may be decided using random numbers. As degree of difficulty in operation of the lure 51 may be changed by making use of the arrangement of those marks 53A and 53B, a plurality of data with different degrees of difficulty, may be previously prepared in the ROM 18, and data with high degree of difficulty may be selected for display in the lure window 50, as the game progresses. A lure may be given to the player as a reward for wins in the games, and the performance of the lure may be advanced, while the degree of the difficulty in the required operation may be raised at the same time.

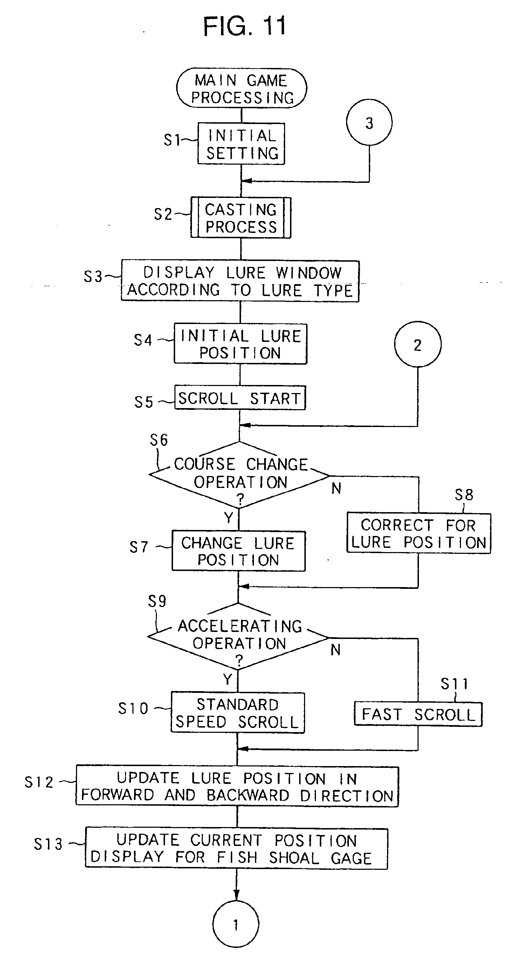

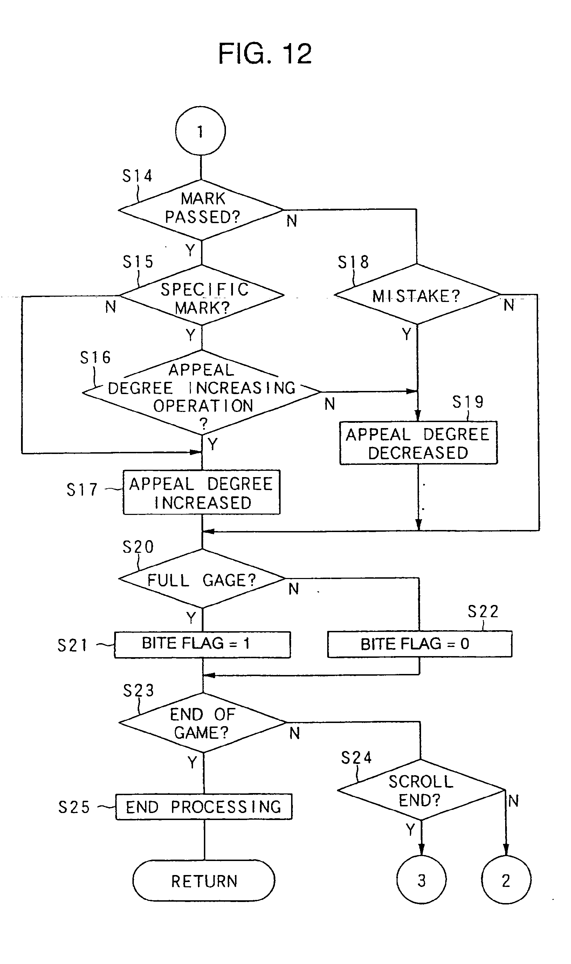

Then, various kinds of processing for a fishing game will be described, which the CPU 11 executes according to programs stored in the external storage device 17 referring to FIGS. 11 to 14. FIGS. 11 and 12 show a flowchart denoting a procedure for a main gaming processing executed at playing the fishing game.

In the main game processing, an initial conditions are set for playing the fishing game (step S1), and subsequently, casting processing is performed (step S2). The casting processing, in which a casting position of a lure is decided referring to signals from the input device 4, will be described later. On completion of the casting processing, the lure window 50A of FIG. 8, or the lure window 50B of FIG. 9 is displayed according to the lure type (step S3). Data (position data) to specify the position of the lure 51 in the background 52 are set to an initial value, and the lure 51 is displayed at an initial position in the window 50 (step S4).

Then, scroll of the background 52 is started (step S5). Subsequently, it is judged whether or not the course change operation of the lure has been done (step S6). The course change operation is mentioned above. The position data of the lure 51 is changed according to the contents of the operation, when a course change operation is performed. Following the above, the display position of the lure 51 is changed in a crosswise direction of the window 50 (in a crosswise direction in FIG. 7 and in a vertical direction, in FIG. 9). At step S6, the position data in the vertical direction is corrected by a predetermined amount (step S8) according to the type of the lure, when it is judged that there is no course change operation. The correction is performed for expressing that the lure 51 floats and sinks when the lure window 50B of FIG. 9 is used. The amount of correction for one time is previously set, for example, every lure 51, and stored in the ROM 18. The correction may not be performed when the lure window 50A of FIG. 7 is used.

After processing at step S7, or S8, it is judged whether or not a predetermined amount of speed-up operation for the input device 4 has been performed (step S9). In the case of no speed-up operation, the background 52 is scrolled at a standard speed (step S10), and in the case of the operation, the background 52 is made to be scrolled at a high speed (step S11). Then, data showing the position of the lure in a back and forth direction in the main screen 30 and the background 52 is updated, according to the scrolling amount (step S12). In addition, the position of the cursor 33a in the gauge of a shoal of fish 33 is renewed, according to the current position of the lure (step S13). After that, the processing is advanced to step S14 of FIG. 12.

At step S14, it is judged whether or not the lure 51 has passed on the mark 53A or 53B. In the present case, ranges with a predetermined width are set in a crosswise direction of the window 50 around the marks 53A and 53B, respectively. And when the lure 51 passes the range, it is concluded that the lure 51 has passed on the mark 53A or 53B. When there is an affirmative decision at step S14, it is judged whether or not it has passed on the mark 53B requiring appeal operation (step S15). In the affirmative response to the decision, it is subsequently decided whether or not the appeal operation has been synchronously done with the passing of the lure 51 on the mark 53B (step S16). In the above case, before and after the lure 51 passes the mark 53B, a fixed allowable range of may be set, and it is decided that the appeal operation has been synchronously performed with the passing on the mark 53B, if there is an appeal operation within the allowable range.

When it is judged that there has been an appeal operation at step S16, or, when it is decided that the lure does not pass on the mark 53B (meaning that it passes on the mark 53A) at step S15, the appeal degree stored in the RAM 13 is increased by a predetermined amount, and the display of the appeal meter 37 is updated according to the above updating (step S17). Then, the processing is advanced to step S20. In the case of the negative decision at step S14, it is judged whether or not the course of the lure 51 is incorrect, that is, deviates from the mark 53A or 53B (step S18). When it is decided that it is incorrect, the appeal degree stored in the RAM 13 is decreased by a predetermined amount, and the display of the appeal meter 37 is updated according to the above updating (step S19). Then, the processing is advanced to step S20. The similar processing is taken when it is decided that there has been no appeal operation at step S16. When it is decided that there has been no passing at step S18 (when there is neither the mark 53A nor 53B at both sides of the lure 51 at step), step S19 is skipped and the processing is advanced to step S20.

At step S20, it is judged whether or not the appeal degree stored in the RAM 13 is the maximum, that is, whether or not the pointer of the appeal meter 37 has reached the right end. If it is the maximum, the value of the bite flag stored in the RAM 13 is set to a value indicating that the bite can take place, e.g., a value "1" (step S21). If it is not the maximum, the value of the bite flag is set to a value indicating that the bite cannot take place, e.g., a value "0" (step S22).

Then, it is judged whether or not predetermined conditions for finishing the game have been fulfilled (step S23). In the negative case, it is subsequently judged whether or not scrolling has been finished, that is, whether or not the lure has been retrieved to a predetermined position of the main screen 30 (a position corresponding to the bottom of the gauge of a shoal of fish 33) (step S24). In the negative case, the processing is returned to step S6, and in the affirmative one, returned to step S2. When it is decided that the game has been over at step S23, the predetermined termination processing is performed (step S25), and the completion of the termination processing device that the processing for the main game has been completed. Various kinds of conditions such as whether a time limit has been over, whether number of caught fish has exceeded a fixed value, and whether mass of caught fish has passed a fixed value, may be used for the predetermined conditions for finishing the game.

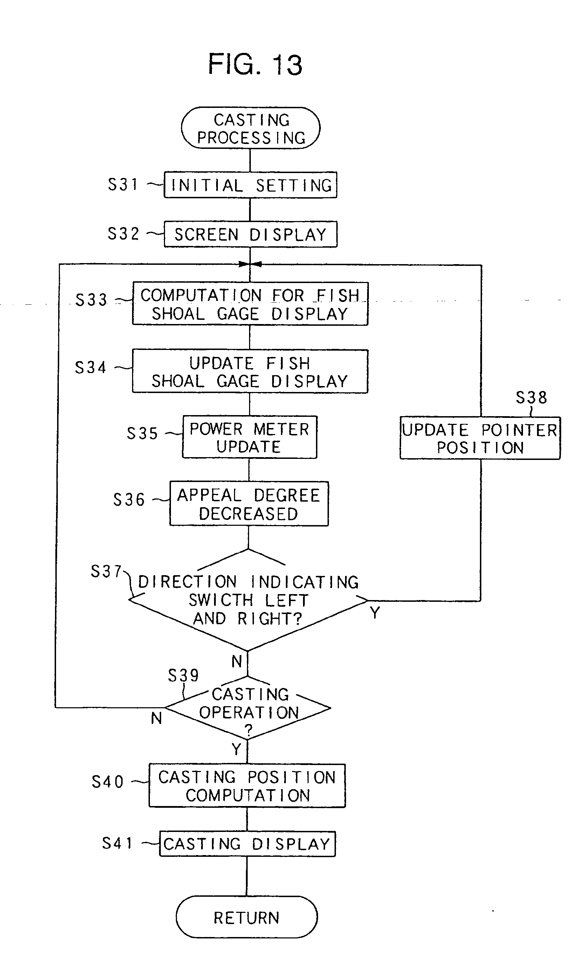

FIG. 13 is a flowchart showing details of a casting processing executed at step S2 of FIG. 11.

In the casting processing, the initialization of parameters and so on for casting of a lure is firstly performed (step S31). Subsequently, images for the casting are displayed on the main screen 30 (step S32). Moreover, calculation for display of the gauge of a shoal of fish 33 is performed (step S33). The display of the gauge 33 is updated based on the above calculation results (step S34). Calculation and display appearance to display the gauge 33 are as described above, referring to FIG. 4.

Then, a value of the power meter 36 stored in the RAM 13 is increased by a predetermined amount, and the display of the power meter 36 is updated according to the above change (step S35). If the value of the power meter 36 is the maximum value at this time, it is reset to the minimum. Subsequently, the appeal degree stored in the RAM 13 is decreased by a predetermined amount. Accordingly, the display of the appeal meter 37 is updated (step S36). Moreover, it is judged whether or not the direction command switch 5 has been operated in a crosswise direction (step S37). In the affirmative decision, the position of the pointer 34 is changed by a predetermined amount in a direction where the direction indicating switch 5 has been operated at step S38, and the processing is returned to step S33.

Therefore, after start of the casting processing, processing from step S33 to step S38 is repeatedly executed, during operation of the direction indicating switch 5 in a crosswise direction by the player, and the pointer 34 of the main screen 30 is moved in a crosswise direction. Then, the fish distribution from the position of the character 31 to the pointer 34 is calculated, and the display of the gauge of a shoal of fish 33 is updated as shown in FIG. 5, according to the above. Thereby, the player may decide the best direction for casting by confirmation of the fish distribution. However, the player is required to decide the direction of casting as early as possible, as the value of the appeal meter 37 is gradually decreased during moving of the pointer 34.

When it is decided that the direction command switch 5 has not been operated in a crosswise direction in step S37, it is judged whether a predetermined casting operation (for example, a pushing operation of the push button switch 6) has been performed for the input device 4 (step S39). When not decided, the processing is returned to step S33. When it is decided that the casting operation has been performed, the casting position is calculated based on the value of the power meter 36 and the position of the pointer 34 at that time (step S40). The casting position is on the line connecting the pointer 34 and the character 31, and the distance from the character 31 is proportional to the value of the power meter 36 at a point when the casting operation has been performed. Subsequently, it is displayed how the lure is cast to the calculated casting position (step S41). The above is all the casting processing.

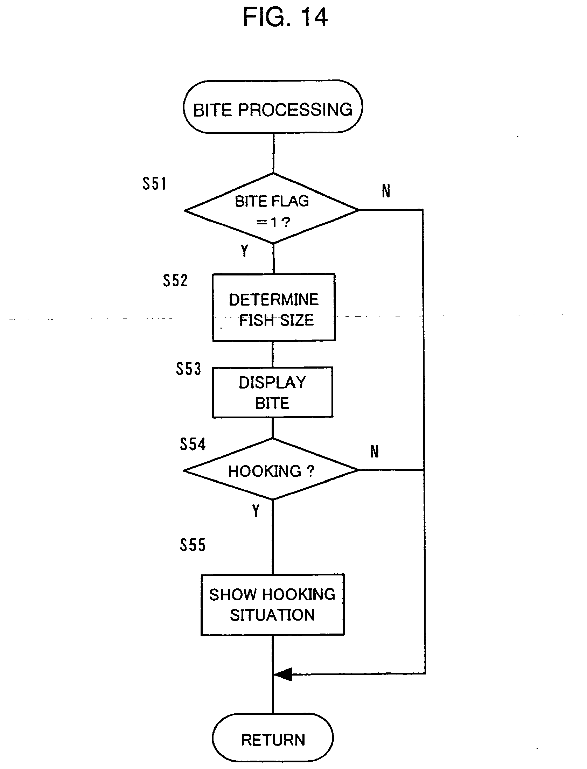

Next, the description will be given of a bite processing. FIG. 14 is a flowchart showing the procedure of the bite processing that the CPU 11 repeatedly executes every a predetermined time period in parallel with the processing described with reference to FIGS. 11 and 12. The bite processing executes processing from the time when a fish bites the lure to the time when the player sets the hook on the fish.

First, it is determined whether or not the bite flag value stored in the RAM 13 is "1" (step S51). The bite flag value is set in step S21 or S22 in FIG. 12. If the bite flag value is "1", the lure is appealing enough. Hence, it is determined that a fish may possibly bite the lure, and then the size of the fish is determined (step S52). In a simplest manner, the size of the fish may be determined by an arithmetic operation using random number. In addition, another method which can achieve a situation more similar to the real fishing situation is to calculate the degree of fish response to the lure by using a predetermined arithmetic operation equation in consideration of the distance from the lure to the fish and/or the type of lure fishes prefer, and to determine the size of the fish based on the calculation result. In this case, for example, the fish size may be set to relatively large if the player is using a relatively large lure or if the player is using a lure which empirically has good results in catching large fish.

Subsequently, the bite display is executed based on the fish size thus determined (step S53). Namely, the CPU 11 determines the line tension value to be shown on the line tension meter 38 (hereinafter also referred to as "line tension at the biting") as well as the time period during which the line tension at the biting is kept (i.e., "biting period). As described above by referring to FIG. 6, these values are determined such that the line tension at the biting is large and the biting period is short as the determined fish size is large. As a specific method of determining them, the line tension at the biting may be increased in proportion to the fish size, and the biting period may be short in reverse-proportion to the fish size. Further, the values may be determined by using, not a proportional relation, but using a quadric relation. Even in that case, however, the fundamental principle that "as the determined fish size is large, the line tension at the biting is large and the biting period is small" is maintained. Thus, based on the determined values, the level of the line tension meter 38 shown on the liquid crystal monitor 3 is increased to execute the bite display.

Subsequently, it is determined whether or not the player executed the hooking manipulation during the bite display, i.e., during the biting period (step S54). This is executed by detecting whether or not the player manipulated the predetermined switch on the input device 4 as the hooking manipulation. If the hooking manipulation is made during the biting period, the hooking situation is represented to the player (step S55). For example, the animation window 32 shown in FIG. 3 is displayed on the main screen 30 to show the fish biting the lure. If the game device 1 includes a vibration mechanism, the hooking may be notified to the player by the vibration.

It is noted that, if the bite flag is not "1" in step S51, the bite processing ends without executing the bite display because the lure is not appealing enough. If the hooking manipulation is not detected during the biting period in step S54 (not only because the player intentionally did not make hooking manipulation, but because the player failed to make the hooking manipulation in time), the fish is not hooked and the bite processing ends.

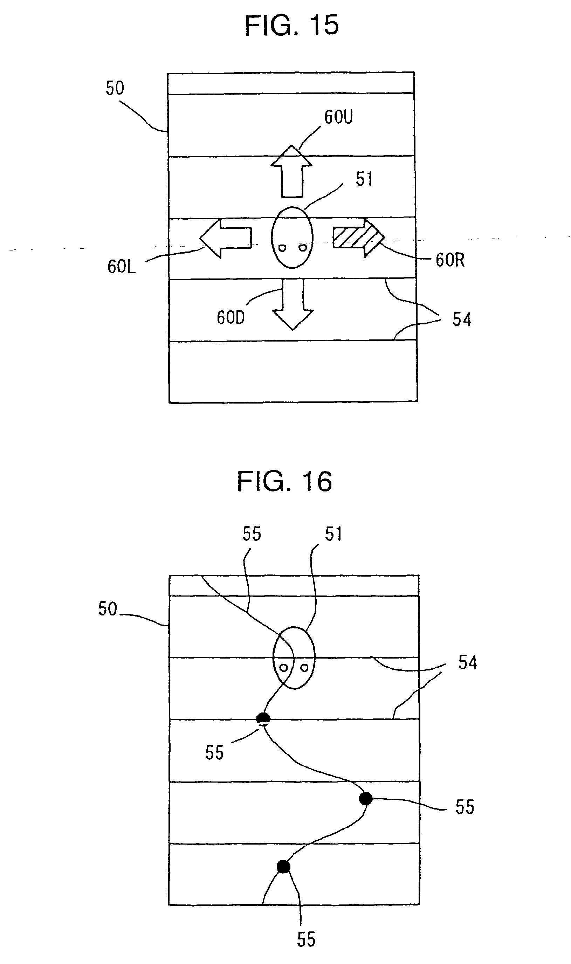

In the embodiment mentioned above, the mark 53A shows only information of the direction for the lure operation, and the mark 53B shows information of the direction and timing for the lure operation. However, only one of them may be used. As shown in FIG. 15, arrow-shaped direction command marks 60U, 60D, 60R, and 60L (occasionally, shown as the reference numeral 60) may be arranged on the up, down, right, and left sides of the lure 51, respectively, and the player may be required to operate the direction command switch 5 in the same direction as that of the lighted mark 60 (in FIG. 14, the mark 60R is lighted).

And a preferable trajectory line 55 of the lure 51 may be displayed in the background 52 as shown in FIG. 16, and the player may be required to operate the lure 51 for following the trajectory. Moreover, an appeal point 55a may be properly set on the trajectory line 55, and, when the lure 51 passes on the point, the player may be required to perform the appeal operation in a similar manner to that of the case where the lure passes on the mark 53B.

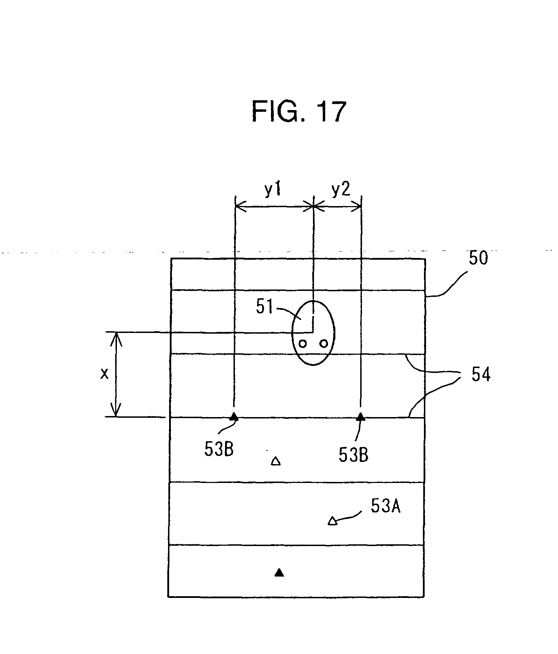

As shown in FIG. 17, a plurality of marks 53B (or 53A is acceptable) may be arranged in a crosswise direction of the lure window 50, and the difference in increased amount of the appeal degree may be provided based on a distance y (y1 and y2) from the lure 51 to the mark 53B at the point when the lure 51 is remote from those marks 53B by a predetermined amount x in a moving direction. In the above case, as the larger distance y causes the more difficult operation for passing on the mark, it is reasonable to set larger increasing amount of the appeal degree for the case at passing on the mark 53B with a larger distance y than that for the case at passing on the mark 53B with a smaller distance y.

In the processing in FIGS. 11 and 12, the scrolling speed of the background 52 is changed (steps S9 to S11) according to the presence of the speed-up operation for the input device 4. Such speed-up operation may be eliminated, and the scrolling speed of the background 52 (equal to the retrieving speed of the lure 51) may be fixed to a fixed value. For example, the background 52 may be scrolled at a fixed speed, and the lure 51 may only be moved in a crosswise direction of the lure window 50 according to the course change operation. A decreasing operation of the scrolling speed to a slower speed than a standard one may be provided. In stead of the change of the scrolling speed or in addition to the above change, the lure 51 may be moved in a back and forth direction of the lure window 50 (a vertical direction of FIG. 7 and a crosswise direction in FIG. 9), according to the change operation of the retrieving speed for the input device 4.

The increased amount of the appeal degree when the lure 51 passes on the mark 53A may be a fixed amount, or may be changed according to the conditions. For example, when a number of lures 51, more than a fixed value, pass on the mark 53A, the increased amount of the appeal degree may be made larger than that of the usual case. The operation for the mark 53B is performed in a similar manner to that of the mark 53A. Pieces of suitable music may be reproduced as a BGM (background music) during guidance of the operation of the lure 51, and the lure 51 may be operated according to a rhythm, using the lure window 50. In addition, when the lure 51 passes on the mark 53A, or when the appeal operation is appropriately performed according to passing on the mark 53B, a sound effect may be generated, or some kinds of productions may be added to the image.

In the above fishing game, the hooking is permitted, and advantageous situations for the player are generated, when the appeal degree reaches the maximum value. However, if the appeal degree reaches within a fixed range from the maximum value, the hooking may be permitted, or, the higher appeal degree may be configured to causes the higher probability for catching fish. In addition, a specially big fish may be configured to be caught, only when the appeal degree reaches the maximum value, or a special technique for the character 31 to catch a fish may be provided. In short, the exactness of the player to the guidance of the lure operation may be evaluated in a form of the appeal degree or the obtained scores to change the game results according to the evaluation results.

In the above-described embodiment, the bite of the fish is notified to the user mainly by the level change of the line tension meter 38. However, other methods may be employed. For example, if the game device 1 includes a vibration mechanism, the bite may be notified to the user by the vibration generated during the biting period. In that case, of course, the vibration level or degree may be increased and the vibration period may be shortened as the fish size is large, like the manner of the line tension meter display.

As described above, according to the game system of the present invention, the indication of the bite by fish is changed according to the size of the fish. Therefore, the player can grasp the size of the biting fish before hooking it, and hence the player can selectively catch fishes of interesting size, without making the hooking manipulation for the fishes of uninteresting size. Thus, the player can enjoy various strategic play in various competition modes, thereby broadening range of entertainment in fishing game.

In addition, according to the storage medium of the present invention, the game system may achieve the above-described enjoyable fishing game by reading out and executing the program stored therein.

## Claims

1. A game system (1) comprising:an image display device (3);
an input device (4) for outputting signals according to manipulation made by a user; and
a control device (11) for executing a fishing game in a virtual fishing spot with reference to the signals output from the input device (4), and for displaying images according to a progress of the fishing game on a screen of the display device (3), the control device (11) comprising:
a size determining means for determining a size of a virtual fish;
a bite notifying means for presenting a temporal change of an amount relating to a bite by a fish to the user to notify the bite of the user;
a change determining means for determining a changing amount and a changing time period of the amount relating to the bite based on the size of the fish determined by the size determining means;
a detecting means for detecting a manipulation of the input device by the user during the changing time period; and
a game executing means for executing the game on a condition that a fish is hooked if the detecting means detects the manipulation during the changing time period wherein the change determining means determines the changing amount and the changing time period of the amount relating to the bite such that the changing amount becomes larger and the changing time period becomes shorter as the size of the fish becomes larger, and wherein the bite notifying means comprises a tension display means (38) for displaying a tension value imposed on a virtual fishing line on the screen, wherein the amount relating to the bite comprises the tension value (D), and wherein the changing time period comprises a time period from a time when the tension value starts changing to a time when the tension value returns to a value before the change.

2. A game system (1) according to any one of claim 1, wherein the bite notifying means comprises a vibrator (8) for applying vibration of a vibrating amount corresponding to the changing amount to the input device for a vibrating time period corresponding to the changing time period.

3. A game system (1) according to claim 1 or 2, further comprising:
a display control means displaying, on the display device, a tension meter indicating the changing amount and the changing time period by a level of the tension meter such that a changing rate of the level of the tension meter is determined in accordance with a time length of the changing tine period.

4. A computer-readable storage medium (12) for storing a game program for executing a fishing game in a virtual fishing spot with reference to signals output from an input device (4) and for displaying images according to a progress of the fishing game on a screen of a display device (3), the program controls a computer to function as:
a size determining means for determining a size of a virtual fish;
a bite notifying means for presenting a temporal change of an amount relating to a bite by a fish to the user to notify the bite to the user;
a change determining means for determining a changing amount and a changing time period of the amount relating to the bite based on the size of the fish determined by the size determining means
a detecting means for detecting a manipulation of the input device by the user during the changing time period; and
a game executing means for executing the game on a condition that a fish is hooked if the detecting means detects the manipulation during the changing time period, wherein the change determining means determines the changing amount and the changing time period of the amount relating to the bite such that the changing amount becomes larger and the changing time period becomes shorter as the size of the fish becomes larger, and wherein the bite notifying means comprises a tension display means for displaying a tension value imposed on a virtual fishing line on the screen, wherein the amount relating to the bite comprises the tension value, and wherein the changing time period comprises a time period from a time when the tension value starts changing to a time when the tension value returns to a value before the change.

## Patentansprüche

1. Spielsystem (1), das umfasst:
eine Bildanzeigevorrichtung (3);
eine Eingabevorrichtung (4) zum Ausgeben von Signalen entsprechend einer von einem Benutzer ausgeführten Bedienung; und
eine Steuervorrichtung (11) zum Ausführen eines Angelspiels an einem virtuellen Angelplatz unter Bezugnahme auf die von der Eingabeeinrichtung (4) ausgegebenen Signale und zum Anzeigen von Bildern entsprechend einem Fortschritt des Angelspiels auf einem Bildschirm der Anzeigeeinrichtung (3), wobei die Steuervorrichtung (11) umfasst:
eine Größenbestimmungseinrichtung zum Bestimmen einer Größe eines virtuellen Fisches;
eine Beiß-Mitteilungseinrichtung, die eine temporäre Änderung eines Maßes, das sich auf einen Biss eines Fisches bezieht, für den Benutzer darstellt, um dem Benutzer den Biss mitzuteilen;
eine Änderungs-Bestimmungseinrichtung zum Bestimmen eines Änderungs-Maßes und eines Änderungs-Zeitraums des Maßes, das sich auf den Biss bezieht, auf Basis der Größe des Fisches, die durch die Größenbestimmungseinrichtung bestimmt wird;
eine Erfassungseinrichtung zum Erfassen einer Betätigung der Eingabeeinrichtung durch den Benutzer während des Änderungs-Zeitraums; und
eine Spielausführeinrichtung zum Ausführen des Spiels unter einer Bedingung, dass ein Fisch am Haken ist, wenn die Erfassungseinrichtung die Betätigung während des Änderungs-Zeitraums erfasst, wobei die Änderungs-Bestimmungseinrichtung das Änderungs-Maß und den Änderungs-Zeitraum des Maßes, das sich auf den Biss bezieht, so bestimmt, dass das Änderungs-Maß größer wird und der Änderungs-Zeitraum kürzer wird, wenn die Größe des Fisches zunimmt, und wobei die Biss-Mitteilungseinrichtung eine Spannungs-Anzeigeeinrichtung (38) umfasst, die einen Wert von Spannung, die auf eine virtuelle Angelschnur ausgeübt wird, auf dem Bildschirm anzeigt, und das Maß, das sich auf den Biss bezieht, den Spannungswert (D) umfasst, und der Änderungs-Zeitraum einen Zeitraum von einer Zeit, zu der sich der Spannungswert zu ändern beginnt, bis zu einer Zeit umfasst, zu der der Spannungswert auf einen Wert vor der Änderung zurückkehrt.

2. Spielsystem (1) nach Anspruch 1, wobei die Biss-Mitteilungseinrichtung eine Schwingungseinrichtung (8) umfasst, die Schwingung eines Schwingungs-Maßes, das dem Änderungs-Maß entspricht, auf die Eingabeeinrichtung über einen Schwingungs-Zeitraum ausübt, der dem Änderungs-Zeitraum entspricht.

3. Spielsystem (1) nach Anspruch 1 oder 2, das des Weiteren umfasst:
eine Anzeige-Steuereinrichtung, die auf der Anzeigevorrichtung einen Spannungsmesser anzeigt, der das Änderungs-Maß und den Änderungs-Zeitraum mit einem Pegel des Spannungsmessers so anzeigt, dass eine Änderungs-Geschwindigkeit des Pegels des Spannungsmessers entsprechend einer zeitlichen Länge des Änderungs-Zeitraums bestimmt wird.

4. Computerlesbares Speichermedium (12) zum Speichern eines Spielprogramms zum Ausführen eines Angelspiels an einer virtuellen Angelstelle unter Bezugnahme auf Signale, die von einer Eingabevorrichtung-(4) ausgegeben werden, und zum Anzeigen von Bildern entsprechend einem Fortschritt des Angelspiels auf einem Bildschirm einer Anzeigevorrichtung (3), wobei das Programm einen Computer so steuert, dass er arbeitet als:
eine Größen-Bestimmungseinrichtung zum Bestimmen einer Größe eines virtuellen Fisches;
eine Biss-Mitteilungseinrichtung, die dem Benutzer eine temporäre Änderung eines Maßes anzeigt, das sich auf einen Biss durch einen Fisch bezieht, um dem Benutzer den Biss mitzuteilen;
eine Änderungs-Bestimmungseinrichtung zum Bestimmen eines Änderungs-Maßes und eines Änderungs-Zeitraums des Maßes, das sich auf den Biss bezieht, auf Basis der Größe des Fischs, die durch die Größen-Bestimmungseinrichtung bestimmt wird;
eine Erfassungseinrichtung zum Erfassen einer Betätigung der Eingabevorrichtung durch den Benutzer während des Änderungs-Zeitraums; und
eine Spielausführeinrichtung zum Ausführen des Spiels unter einer Bedingung, dass ein Fisch am Haken ist, wenn die Erfassungseinrichtung die Betätigung während des Änderungs-Zeitraums erfasst, wobei die Änderungs-Bestimmungseinrichtung das Änderungs-Maß und den Änderungs-Zeitraum des Maßes, das sich auf den Biss bezieht, so bestimmt, dass das Änderungs-Maß zunimmt und der Änderungs-Zeitraum kürzer wird, wenn die Größe des Fisches zunimmt, und wobei die Biss-Mitteilungseinrichtung eine Spannungs-Anzeigeeinrichtung umfasst, die einen Wert von Spannung, die auf eine virtuelle Angelschnur ausgeübt wird, auf dem Bildschirm anzeigt, wobei das Maß, das sich auf den Biss bezieht, den Spannungswert umfasst, und der Änderungs-Zeitraum einen Zeitraum von einer Zeit, zu der sich der Spannungswert zu ändern beginnt, bis zu einer Zeit umfasst, zu der der Spannungswert auf einen Wert vor der Änderung zurückkehrt.

## Revendications

1. Système de jeu (1) comprenant un dispositif d'affichage d'image (3),
un dispositif d'entrée (4) destiné à fournir en sortie des signaux conformément à une manipulation faite par un utilisateur, et
un dispositif de commande (11) destiné à exécuter un jeu de pêche dans un site de pêche virtuel en faisant référence aux signaux fournis en sortie du dispositif d'entrée (4), et destiné à afficher des images conformément à une progression du jeu de pêche sur un écran du dispositif d'affichage (3), le dispositif de commande (11) comprenant :
un moyen de détermination de taille destiné à déterminer la taille d'un poisson virtuel,
un moyen de notification de touche destiné à présenter un changement dans le temps d'une quantité se rapportant à une touche par un poisson pour l'utilisateur afin de notifier la touche à l'utilisateur,
un moyen de détermination de changement destiné à déterminer une valeur de changement et un intervalle de temps de changement de la quantité se rapportant à la touche sur la base de la taille du poisson déterminée par le moyen de détermination de taille,
un moyen de détection destiné à détecter une manipulation du dispositif d'entrée par l'utilisateur au cours de l'intervalle de temps de changement, et
un moyen d'exécution de jeu destiné à exécuter le jeu sur une condition selon laquelle un poisson est ferré si le moyen de détection détecte la manipulation au cours de l'intervalle de temps de changement où le moyen de détermination de changement détermine la valeur du changement et l'intervalle de temps de changement de la quantité se rapportant à la touche de sorte que la valeur de changement augmente et que l'intervalle de temps de changement diminue à mesure que la taille du poisson augmente, et où le moyen de notification de touche comprend un moyen d'affichage de tension (38) destiné à afficher une valeur de tension imposée sur une ligne de pêche virtuelle sur l'écran, où la quantité se rapportant à la touche comprend la valeur de tension (D), et où l'intervalle de temps de changement comprend un intervalle de temps depuis un instant auquel la valeur de tension commence à changer jusqu'à un instant auquel la valeur de tension revient à une valeur avant le changement.

2. Système de jeu (1) selon l'une quelconque de la revendication 1, dans lequel le moyen de notification de touche comprend un vibrateur (8) destiné à appliquer une vibration d'une quantité de vibration correspondant à la valeur de changement au dispositif d'entrée pendant un intervalle de temps de vibration correspondant à l'intervalle de temps de changement.

3. Système de jeu (1) selon la revendication 1 ou 2, comprenant en outre:
un moyen de commande d'affichage affichant, sur le dispositif d'affichage, un dispositif de mesure de tension indiquant la valeur de changement et l'intervalle de temps de changement par un niveau du dispositif de mesure de tension de sorte qu'une vitesse de changement du niveau du dispositif de mesure de tension est déterminée conformément à une durée de l'intervalle de temps de changement.

4. Support de mémorisation lisible par un ordinateur (12) destiné à mémoriser un programme de jeu destiné à exécuter un jeu de pêche dans un site de pêche virtuel en faisant référence à des signaux fournis en sortie d'un dispositif d'entrée (4) et destiné à afficher des images conformément à une progression du jeu de pêche sur un écran d'un dispositif d'affichage (3), le programme commande un ordinateur afin qu'il fonctionne en tant que :
un moyen de détermination de taille destiné à déterminer la taille d'un poisson virtuel,
un moyen de notification de touche destiné à présenter un changement dans le temps d'une quantité se rapportant à une touche par un poisson pour l'utilisateur afin de notifier la touche à l'utilisateur,
un moyen de détermination de changement destiné à déterminer une valeur de changement et un intervalle de temps de changement de la quantité se rapportant à la touche sur la base de la taille du poisson déterminée par le moyen de détermination de taille,
un moyen de détection destiné à détecter une manipulation du dispositif d'entrée par l'utilisateur au cours de l'intervalle de temps de changement, et
un moyen d'exécution de jeu destiné à exécuter le jeu sur une condition selon laquelle un poisson est ferré si le moyen de détection détecte la manipulation au cours de l'intervalle de temps de changement, où le moyen de détermination de changement détermine la valeur de changement et l'intervalle de temps de changement de la quantité se rapportant à la touche de sorte que la quantité de changement augmente et que l'intervalle de temps de changement diminue à mesure que la taille du poisson augmente, et où le moyen de notification de touche comprend un moyen d'affichage de tension destiné à afficher une valeur de tension imposée sur une ligne de pêche virtuelle sur l'écran, où la quantité se rapportant à la touche comprend la valeur de tension, et où l'intervalle de temps de changement comprend un intervalle de temps depuis un instant auquel la valeur de tension commence à changer jusqu'à un instant auquel la valeur de tension revient à une valeur avant le changement.
